# EUROPÄISCHE PATENTSCHRIFT

(11) **EP 3 322 913 B1**
(45) Veröffentlichungstag und Bekanntmachung des Hinweises auf die Patenterteilung: **15.01.2020**
(21) Anmeldenummer: 16738740.6
(22) Anmeldetag: 12.07.2016
(51) Int. Cl.: F16F 13/10

(54) **TRENNVORRICHTUNG UND HYDROLAGER**
SEPARATING DEVICE AND HYDRAULIC MOUNT
DISPOSITIF DE SÉPARATION ET PALIER HYDRAULIQUE

(30) Priorität: 15.07.2015 DE 102015111505
(43) Veröffentlichungstag der Anmeldung: 23.05.2018
(73) Patentinhaber: Vibracoustic GmbH, 64293 Darmstadt (DE)
(72) Erfinder: BECKMANN, Wolfgang, 64289 Darmstadt (DE); YILDIRIM, Gamze, 68161 Mannheim (DE); FARRENKOPF, Peter, 68519 Viernheim (DE)
(74) Vertreter: Flügel Preissner Schober Seidel
(86) Internationale Anmeldenummer: PCT/EP2016/066489
(87) Internationale Veröffentlichungsnummer: WO 2017/009318

(56) Entgegenhaltungen:
- EP-A1- 1 574 742
- WO-A1-2013/005261
- US-A1- 2011 210 488

## Beschreibung

Die Erfindung betrifft eine Trennvorrichtung zur Anordnung zwischen einer Arbeitskammer und einer Ausgleichskammer eines Hydrolagers, welche eine erste Düsenplatte, eine zweite Düsenplatte und eine Membran umfasst. Die Membran ist zwischen der ersten Düsenplatte und der zweiten Düsenplatte angeordnet und elastisch ausgebildet. Ferner betrifft die Erfindung ein Hydrolager, welches eine Arbeitskammer, eine Ausgleichskammer und eine zwischen diesen Kammern angeordnete Trennvorrichtung umfasst.

Membranen mit Einschnitten werden bei hydraulisch gedämpften Motorlagern in Düsenkäfigen eingesetzt, um Druckdifferenzen zwischen der Arbeitskammer und der Ausgleichskammer zu reduzieren. Damit lassen sich zumeist aus Kavitationen resultierende Geräusche im Kraftfahrzeug vermeiden. Um die Funktion sicherzustellen, ist es erforderlich, die Position der Einschnitte relativ zum Düsenkäfig konstant zu halten. Im Stand der Technik geschieht dies bei entkoppelten Membranen, das heißt bei Membranen, die sich axial innerhalb des Düsenkäfigs bewegen können, in der Regel durch Formschluss. Beispielsweise ist an dem Düsenkäfig eine sich in axialer Richtung erstreckende Nase ausgebildet, welche in eine Ausnehmung der Membran eingreift. Dadurch kann sich die Membran weiterhin axial bewegen, wobei gleichzeitig eine Verdrehung der Membran in Umfangsrichtung vermieden wird.

In den Druckschriften JP 2009-168183, EP 1 559 926 B1, FR 2 902 162 und EP 1 306 576 B1 wird eine alternative Verdrehsicherung beschrieben. Die dort angegebene Lösung umfaßt einen an der Membran angeordneten Stift, welcher in ein Loch des Düsenkäfigs eingreift. Die Höhe des Stifts ist so gewählt, daß unabhängig von der axialen Position der Membran der Formschluss zwischen dem Stift und dem Loch in dem Düsenkäfig stets gewährleistet ist. Somit kann sich die Membran axial bewegen und ist gleichzeitig gegen Verdrehungen in Umfangsrichtung gesichert.

US 2011/210488 A1, das als nächstliegender Stand der Technik betrachtet wird, befasst sich mit einem Hydrolager, das ein Trennelement aufweist. Das Trennelement dient zur Verbindung einer ersten Arbeitskammer mit einer zweiten Arbeitskammer über einen Tilgerkanal und einen gestuften Bereich und ein Deckelelement auf, das eine Ventilgehäusekammer begrenzt. Darin ist eine Membran als ein Ventilelement angeordnet. Ein peripherer Bereich des Ventilelements wird in der Ventilgehäusekammer gehalten. Ferner weist das Ventilelement Löcher auf, die so angeordnet sind, dass sie in einer axialen Richtung gesehen mit dem Durchgang nicht überlappen. Bei kleinen hochfrequenten Schwingungen kann Flüssigkeit durch die Löcher und den Kanal strömen. Bei niederfrequenten und großamplitudigen Schwingungen wird der Kanal durch das Ventilelement verschlossen, so dass die Tilgung des Hydrolagers bei niederfrequenten und großamplitudigen Schwingungen lediglich durch den Tilgerkanal erreicht wird.

EP 1 574 742 A1 befasst sich ebenfalls mit einem Hydrolager, das eine Trennvorrichtung aufweist, welche einen Tilgerkanal sowie ein Düsenkäfig aufweist. In dem Düsenkäfig ist eine Membran angeordnet, die einen dicken Bereich in der Mitte und einen dünnen Bereich radial außerhalb aufweist. Die Membran ist mit keinen Öffnungen versehen. Die Membran weist Rippen sowie am radialen Rand einen erhöhten Bereich auf. Sowohl die Rippen als auch der erhöhte Bereich weisen eine derartige Größe auf, dass die partition membrane in den Düsenkäfig eingeklemmt ist.

WO 2013/005261 A1 befasst sich mit einem hydraulisch dämpfenden Lager. Aufgabe der vorliegenden Erfindung ist es, eine Verdrehsicherung für eine Membran anzugeben, welche einen einfacheren Aufbaut hat.

Die Aufgabe wird durch die Trennvorrichtung nach Anspruch 1 und das Hydrolager nach Anspruch 8 gelöst.

Bevorzugte Ausführungsformen der Trennvorrichtung werden in den Ansprüchen 2 bis 7 angegeben.

Die Erfindung betrifft eine Trennvorrichtung zur Anordnung zwischen einer Arbeitskammer und einer Ausgleichskammer eines Hydrolagers. Die Trennvorrichtung umfasst eine erste Düsenplatte, eine zweite Düsenplatte, welche von der ersten Düsenplatte in einem ersten Abstand beabstandet ist, und eine Membran. Die Membran ist zwischen der ersten Düsenplatte und der zweiten Düsenplatte angeordnet und ist elastisch ausgebildet. Ferner weist die Membran eine Dicke auf. Die Membran weist wenigstens eine Erhebung auf, welche gegenüber der Membran eine Höhe hat. Die Erhebung ist derart ausgebildet, dass sie im Wesentlichen punktförmig an der ersten und/oder zweiten Düsenplatte anliegt. Die Dicke der Membran und die Höhe der Erhebung sind im nicht eingebauten Zustand zusammen größer als der erste Abstand, so dass die Membran punktförmig und ausschließlich durch die Erhebung zwischen der ersten Düsenplatte und der zweiten Düsenplatte eingeklemmt ist.

Die Trennvorrichtung wird insbesondere zwischen einer Arbeitskammer und einer Ausgleichskammer eines Hydrolagers vorgesehen. Die Trennvorrichtung umfasst beispielsweise einen Düsenkäfig. Darüber hinaus kann die Trennvorrichtung einen oder mehrere Durchgänge aufweisen, welche eine Fluidverbindung zwischen der Arbeitskammer und der Ausgleichskammer des Hydrolagers herstellen können.

Die Trennvorrichtung weist eine erste Düsenplatte und eine zweite Düsenplatte auf, welche in einem ersten Abstand voneinander angeordnet sind. Die erste Düsenplatte und/oder die zweite Düsenplatte sind vorzugsweise plattenförmig ausgebildet. Insbesondere weisen die erste Düsneplatte und die zweite Düsenplatte auf der der Membran zugewandten Seite eine ebene Oberfläche auf. Die erste Düsenplatte und/oder die zweite Düsenplatte kann mit einer oder mehreren Öffnungen versehen sein.

Die Membran ist zwischen der ersten Düsenplatte und der zweiten Düsenplatte derart angeordnet, dass sie sich wenigstens bereichsweise axial bewegen kann. Insbesondere bedeutet dies, dass ein Freiraum zwischen der Membran und der ersten Düsenplatte und/oder der zweiten Düsenplatte vorgesehen ist. Dieser Freiraum ist beispielsweise mit dem Fluid des Hydrolagers gefüllt. Mit anderen Worten liegt die Membran vorzugsweise nicht über ihre ganze Fläche an sowohl der ersten Düsenplatte als auch der zweiten Düsenplatte an. Die Membran ist somit axial beweglich. Da die Membran elastisch ausgebildet ist, kann sich die Membran in axialer Richtung verformen. Die Membran ist für die Funktionsweise der Trennvorrichtung somit keine geklemmte Membran, sondern eine entkoppelte Membran.

Die Dicke der Membran erstreckt sich vorzugsweise in axialer Richtung der Membran. Die axiale Richtung der Membran ist insbesondere senkrecht zur flächigen Ausbreitung der Membran, in welcher die Umfangsrichtung angeordnet ist. Die erste Düsenplatte und/oder die zweite Düsenplatte erstrecken sich vorzugsweise in der Ebene der Umfangsrichtung.

Die Membran kann aus einem elastischen Material, wie beispielsweise einem Elastomer, ausgebildet sein. Insbesondere ist die Membran derart elastisch, dass sie sich in der axialen Richtung bereichsweise verformen kann. Bevorzugt ist die gesamte Membran elastisch ausgestaltet, so dass sich sämtliche Bereiche der Membran axial verformen lassen. Beispielsweise wird die Membran nur in der Nähe einer Öffnung in der ersten Düsenplatte und/oder der zweiten Düsenplatte verformt, wenn ein Druckunterschied zwischen der Arbeitskammer oder der Ausgleichskammer herrscht. Somit kann sich die Membran insbesondere bereichsweise in die axiale Richtung verformen, so dass beispielsweise Ausbeulungen an der Membran entstehen.

Die Membran ist im Wesentlichen scheibenförmig oder plattenförmig ausgebildet. An dieser im Wesentlichen plattenförmigen Ausgestaltung ist wenigstens eine Erhebung vorgesehen. Die Erhebung ist insbesondere lokal ausgebildet, so dass die Erhebung im Wesentlichen punktförmig an der ersten und/oder der zweiten Düsenplatte anliegt. Die Erhebung weist gegenüber der plattenförmigen Ausgestaltung der Membran eine Höhe auf, so dass die Spitze der Erhebung die übrige Membran in dieser Höhe überragt.

Die Höhe der Erhebung plus die Dicke der Membran ist in einem nicht eingebauten Zustand, das heißt, wenn die Erhebung und/oder die Membran nicht komprimiert sind, größer als der erste Abstand zwischen der ersten Düsenplatte und der zweiten Düsenplatte. Folglich sind die Membran und/oder die Erhebung im eingebauten Zustand zwischen der ersten Düsenplatte und der zweiten Düsenplatte komprimiert. Die Klemmung erfolgt dabei nur an der Stelle der Erhebung.

Da die Erhebung punktförmig ausgebildet ist und somit punktförmig an der ersten Düsenplatte und/oder der zweiten Düsenplatte anliegt, ist der Großteil der Membran von der ersten Düsenplatte und/oder der zweiten Düsenplatte beabstandet, so dass diese sich weiterhin an Stellen ohne Erhebung in axialer Richtung elastisch verformen kann. Punktförmig bedeutet in diesem Zusammenhang, dass die Fläche der Erhebung im größten Querschnitt senkrecht zur axialen Richtung der Erhebung kleiner als 1 % der Fläche der Membran ist. Vorzugsweise ist die Fläche der Erhebung kleiner als 0,5 % und insbesondere kleiner als 2 %o. Vorzugsweise ist die Fläche, über die die Erhebung an der ersten und/oder der zweiten Düsenplatte anliegt, kleiner als der größte Querschnitt der Erhebung.

Das Vorsehen wenigstens einer Erhebung, welche die Membran punktförmig oder lokal zwischen die erste Düsenplatte und die zweite Düsenplatte klemmt, hat den bevorzugten Vorteil, dass die Membran sich nicht in der Umfangsrichtung drehen kann, da die Membran eingeklemmt ist. Da jedoch die Erhebung punktförmig oder lokal ausgebildet ist, wird die axiale Verformbarkeit der Membran und damit die axiale Beweglichkeit der Membran nur unwesentlich beeinflusst. Das Verhalten der Membran entspricht somit vorzugsweise im Wesentlichen einer entkoppelten Membran, wobei gleichzeitig eine Verdrehsicherung vorgesehen ist.

Ein weiterer bevorzugter Vorteil der Erhebung ist, dass beim Einbauen der Membran in die Düsenplatte die Anordnung der Membran relativ zur Düsenplatte nicht entscheidend ist, da bei geeigneter Anordnung der Erhebung stets eine Einklemmung der Membran zwischen der ersten Düsenplatte und der zweiten Düsenplatte erfolgt. Folglich ist die Fertigung der Trennvorrichtung vereinfacht. Ferner kann im Vergleich zum Stand der Technik auf eine Öffnung oder einen Vorsprung bei der Trennvorrichtung zur Fixierung der Membran verzichtet werden. Somit kann der Aufbau der Trennvorrichtung ebenfalls vereinfacht werden.

Es ist bevorzugt, dass die Erhebung einen ersten Seitenabschnitt, welcher von einer ersten Seite der Membran vorsteht, und einen zweiten Seitenabschnitt, welcher von einer zweiten Seite der Membran vorsteht, umfasst.

Vorzugsweise steht der erste Seitenabschnitt der Erhebung in Richtung der ersten Düsenplatte von der Membran vor. Der zweite Seitenabschnitt steht insbesondere von der zweiten Seite, welche der zweiten Düsenplatte zugewandt ist, von der Membran vor. Das Vorsehen eines ersten Seitenabschnitts und eines zweiten Seitenabschnitts hat den bevorzugten Vorteil, dass die Membran sowohl von der ersten Düsenplatte als auch von der zweiten Düsenplatte beabstandet ist, so dass sie sich sowohl in Richtung der ersten Düsenplatte als auch in Richtung der zweiten Düsenplatte verformen kann, wenn ein Druckunterschied zwischen der Arbeitskammer und der Ausgleichskammer besteht. Die Höhe der Erhebung setzt insbesondere sich somit aus der Höhe des ersten Seitenabschnitts und aus der Höhe des zweiten Seitenabschnitts zusammen.

Es ist bevorzugt, dass die Erhebung elastisch ausgebildet ist, wobei vorzugsweise die Membran und die Erhebung materialeinheitlich ausgebildet sind.

In dieser bevorzugten Ausführungsform werden sowohl die Membran als auch die Erhebung bei der Verklemmung zwischen der ersten Düsenplatte und der zweiten Düsenplatte komprimiert. Bevorzugt sind die Membran und die Erhebung materialeinheitlich ausgebildet, so dass sich die Herstellung der Membran weiter vereinfachen werden kann. Insbesondere wird dazu eine aus dem Stand der Technik bekannte Membran verwendet, bei welcher bei der Herstellung ferner die Erhebung angeformt ist.

Es ist bevorzugt, dass der erste Seitenabschnitt und/oder der zweite Seitenabschnitt kegelförmig oder halbkugelförmig ausgebildet sind.

Die Querschnittsfläche der Erhebung ist wie oben aufgeführt, die Querschnittsfläche senkrecht der axialen Richtung, welche die größte Fläche hat. Somit ist es bei einer kegelförmigen oder halbkugelförmig ausgestalteten Erhebung die Fläche, die benachbart zu der übrigen Oberfläche der Membran angeordnet ist. Bei einer kegelförmigen oder halbkugelförmigen Ausgestaltung der Erhebung ist die Fläche, mit der die Erhebung an der ersten Düsenplatte und/oder an der zweiten Düsenplatte anliegt, vorzugsweise kleiner als die größte Querschnittsfläche. Somit ist diese Kontaktfläche kleiner als die Querschnittsfläche nahe der Membran, so dass die Verklemmung sehr punktförmig und lokal erfolgen kann.

Die erste Düsenplatte und/oder die zweite Düsenplatte weisen wenigstens eine Öffnung auf, wobei die Membran wenigstens einen Einschnitt aufweist, welcher der Öffnung zugeordnet ist.

Bevorzugt sind mehrere Einschnitte vorgesehen. Insbesondere richtet sich die Anzahl der Einschnitte nach der Anzahl der Öffnungen. Beispielsweise liegt jeder zweite Einschnitt einer Öffnung gegenüber.

Da die Membran elastisch ausgestaltet ist, kann sich der Einschnitt bei einem Druckunterschied zwischen der Arbeitskammer und der Ausgleichskammer elastisch verformen, wodurch sich eine Öffnung in der Membran bildet. Um den Fluss des Fluids zwischen der Arbeitskammer und der Ausgleichskammer zu ermöglichen, ist der Einschnitt einer Öffnung in der ersten Düsenplatte und/oder der zweiten Düsenplatte zugeordnet. Insbesondere weist die erste Düsenplatte und die zweite Düsenplatte eine solche Öffnung auf, welche in axialer Richtung deckungsgleich angeordnet sind. Insbesondere ist der Einschnitt zwischen diesen beiden Öffnungen vorgesehen. Durch die lokale Verklemmung der Membran aufgrund der Erhebung ist das Verhalten der Membran auch in Hinsicht der Möglichkeit der Öffnung des Einschnitts bei einem Druckunterschied im Vergleich zu einer elastischen Membran ohne Erhebung nur sehr geringfügig verändert.

Die Membran weist einen inneren Randbereich, einen äußeren Randbereich und einen Zwischenbereich, der zwischen dem inneren Randbereich und dem äußeren Randbereich angeordnet ist, auf, wobei der Einschnitt im Zwischenbereich angeordnet ist.

Der innere Randbereich und/oder der äußere Randbereich können im Vergleich zum Zwischenbereich eine andere Elastizität aufweisen. Bevorzugt ist jedoch, dass der innere Randbereich, der äußere Randbereich und der Zwischenbereich materialeinheitlich ausgebildet sind.

Es ist bevorzugt, dass eine erste Erhebung an dem Zwischenbereich angeordnet ist, wobei vorzugsweise eine zweite Erhebung an dem äußeren Randbereich angeordnet ist.

Das Vorsehen der zweiten Erhebung an dem äußeren Randbereich hat den bevorzugten Vorteil, dass der Abstand zwischen der zweiten Erhebung und dem Einschnitt groß ist, so dass eine Beeinflussung des Verhaltens der Membran nahe des Einschnitts durch die zweite Erhebung nur unwesentlich beeinflusst ist. Vorzugsweise weist die erste Düsenplatte und/oder die zweite Düsenplatte im Bereich des Randbereichs keine Öffnung auf, so dass die Membran unabhängig von der Anordnung in Umfangsrichtung stets zwischen der ersten Düsenplatte und der zweiten Düsenplatte eingeklemmt ist. Somit kann der Einbau der Membran vereinfacht werden.

Es ist bevorzugt, dass die Höhe des ersten Seitenabschnitts und/oder des zweiten Seitenabschnitts mindestens 0,2 mm und maximal 0,7 mm umfasst und insbesondere 0,5 mm misst.

Wird nur ein erster Seitenabschnitt vorgesehen, so ist die Membran von der ersten Düsenplatte um diese Beträge beabstandet. Werden sowohl ein erster Seitenabschnitt als auch ein zweiter Seitenabschnitt vorgesehen, ist die Membran auf beiden Seiten zu der ersten Düsenplatte und der zweiten Düsenplatte in den oben genannten Abständen beabstandet, so dass sie zentriert angeordnet ist. Es hat sich gezeigt, dass das axiale Verhalten der Membran im Vergleich zu einer komplett ungekoppelten Membran bereits bei diesen Höhen der Erhebung nur unwesentlich beeinflusst wird.

Es ist bevorzugt, dass maximal vier Erhebungen an der Membran vorgesehen sind.

Insbesondere werden dabei drei zweite Erhebungen an dem Randbereich vorgesehen und eine erste Erhebung in dem Zwischenbereich. Diese Ausgestaltung stellt eine besonders gute Verdrehsicherung bereit, wobei gleichzeitig das axiale Verhalten der Membran im Vergleich zu einer komplett ungekoppelten Membran nur unwesentlich verändert ist.

Ferner betrifft die Erfindung ein Hydrolager, welches eine Arbeitskammer, eine Ausgleichskammer und eine Trennvorrichtung, so wie sie oben beschrieben ist, umfasst. Die Trennvorrichtung ist zwischen der Arbeitskammer und der Ausgleichskammer angeordnet.

Vorzugsweise gelten für das Hydrolager die oben angestellten Überlegungen und Vorteile hinsichtlich der Trennvorrichtung.

Eine bevorzugte Ausführungsform der Erfindung wird nun anhand der beigefügten Zeichnungen erläutert. Darin zeigen:
- Fig. 1: ein Hydrolager mit einer Trennvorrichtung;
- Fig. 2: eine Draufsicht auf die Trennvorrichtung mit einer Membran;
- Fig. 3: eine Draufsicht auf die Membran;

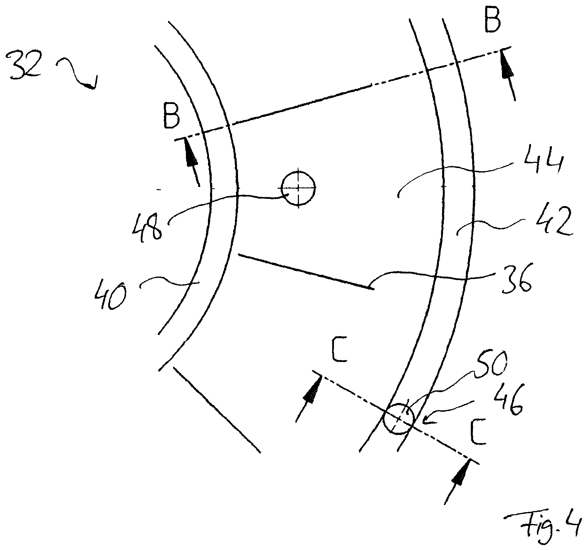

- Fig. 4: einen vergrößerten Ausschnitt der Membran von Fig. 3;
- Fig. 5: eine Querschnittsansicht der Membran entlang der Linie A-A;
- Fig. 6: eine Querschnittsansicht der Membran entlang der Linie 8-B; und
- Fig. 7: eine Querschnittsansicht der Membran entlang der Linie C-C.

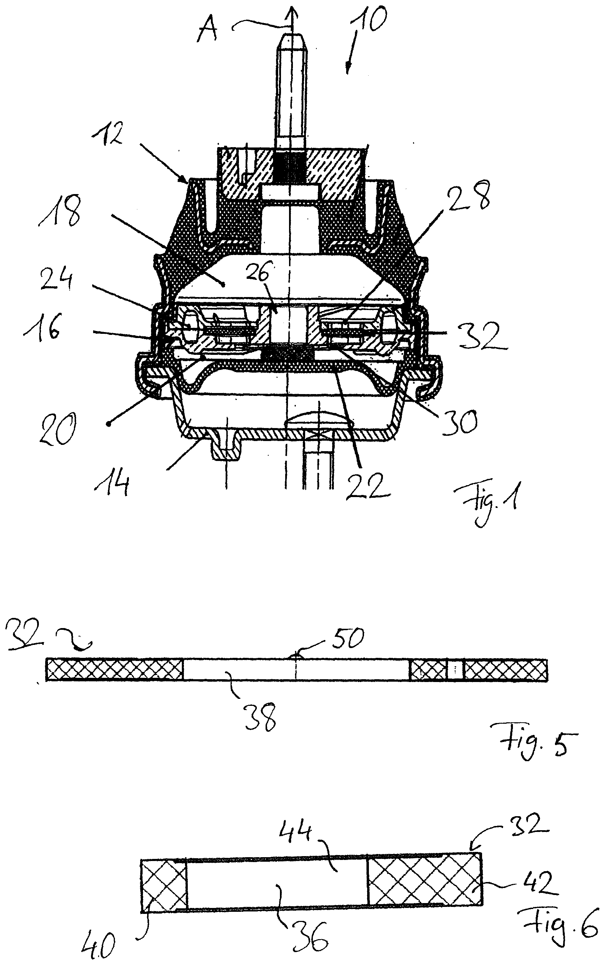

Das in Fig. 1 dargestellte Hydrolager 10 weist ein Traglager 12 und ein Gehäuse 14 auf, welches das Auflager bildet. Zwischen dem Traglager 12 und dem Auflager 14 ist eine Trennvorrichtung 16 angeordnet, welche das Hydrolager 10 in eine Arbeitskammer 18 und eine Ausgleichskammer 20 einteilt. Somit ist die Arbeitskammer 18 von dem Traglager 12 und der Trennvorrichtung 16 begrenzt, während die Ausgleichskammer 20 durch die Trennvorrichtung 16 und eine Entkopplungsmembran 22 begrenzt ist.

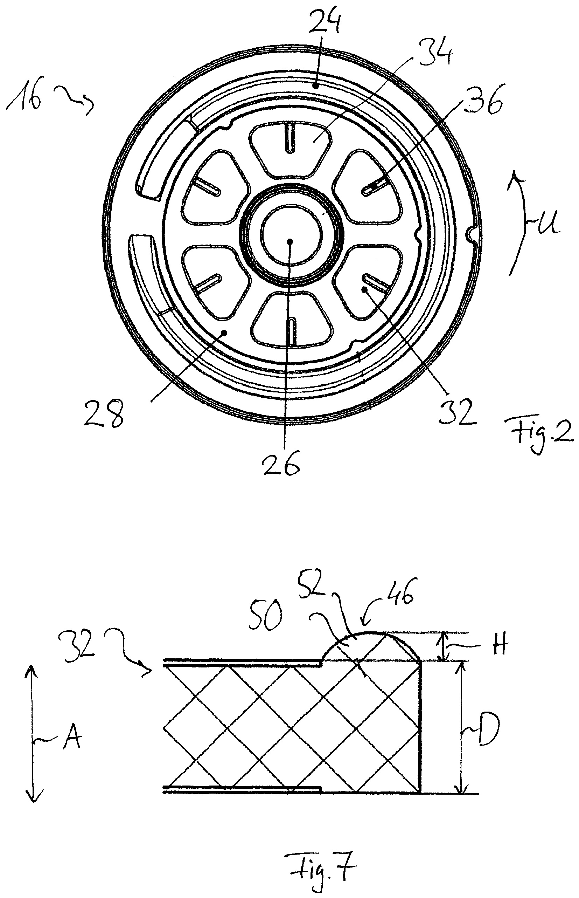

Die Trennvorrichtung weist einen Überströmkanal 24, einen Kanal 26, eine erste Düsenplatte 28, eine zweite Düsenplatte 30 und eine Membran 32 auf, wie dies in Fig. 1 gezeigt ist. Der Überströmkanal 24 und der Kanal 26 stellen eine Fluidverbindung zwischen der Arbeitskammer 18 und der Ausgleichskammer 20 dar. In der in Fig. 2 dargestellten Draufsicht auf die Trennvorrichtung 16 ist die Anordnung von Überströmkanal 24 und Kanal 26 zu erkennen.

Die Membran 32 ist zwischen der ersten Düsenplatte 28 und der zweiten Düsenplatte 30 angeordnet. Die erste Düsenplatte 28 und die zweite Düsenplatte 30 weisen sechs Öffnungen 34 auf, welche in einer axialen Richtung A deckungsgleich angeordnet sind. Die erste Düsenplatte 28 und die zweite Düsenplatte 30 sind in der axialen Richtung A durch einen ersten Abstand beabstandet. Die axiale Richtung A entspricht der axialen Richtung des Hydrolagers 10. Eine Umfangsrichtung U ist senkrecht zur axialen Richtung A angeordnet.

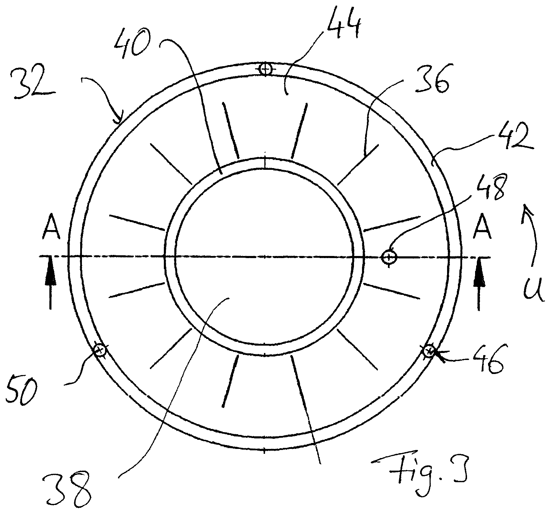

Wie aus Fig. 3 zu entnehmen ist, sind in der Umfangsrichtung U zwölf Einschnitte 36 in der Membran 32 vorgesehen, von denen in Fig. 2 nur sechs sichtbar sind. Die Einschnitte 36 sind in der axialen Richtung A gesehen jeweils den Öffnungen 34 zugeordnet, wobei jeder zweite Einschnitt 36 der Öffnung 34 gegenüberliegt. Bei einem Druckunterschied zwischen der Arbeitskammer 18 und der Ausgleichskammer 20 kann somit Fluid von der einen Kammer über die Öffnungen 34 und die Einschnitte 36 fließen, da die Membran 32 elastisch ausgestaltet ist und sich somit die Einschnitte 36 bei Anliegen eines Druckes öffnen.

Wie in Fig. 3 dargestellt weist die Membran 32 in ihrer Mitte eine Ausnehmung 38 auf, in welcher der Kanal 26 aufgenommen werden kann. Die Membran 32 weist einen inneren Randbereich 40, einen äußeren Randbereich 42 und einen Zwischenbereich 44 auf. Der Zwischenbereich 44 ist zwischen dem inneren Randbereich 40 und dem äußeren Randbereich 42 angeordnet. Die Einschnitte 36 sind in dem Zwischenbereich 44 vorgesehen.

Die Membran 32 weist ferner in der in Fig. 3 dargestellten Ausführungsform vier Erhebungen 46 auf. Die Erhebungen 46 sind in Fig. 3 in ihrer Querschnittsfläche vergrößert dargestellt. Die Erhebungen 46 nehmen jeweils weniger als 1 % der Fläche in der Ebene der Umfangsrichtung U der Membran 32 ein. Die Erhebungen 46 weisen eine erste Erhebung 48, welche in dem Zwischenbereich 44 angeordnet sind, und drei zweite Erhebungen 50 auf, welche in dem äußeren Randbereich 42 angeordnet sind. Die Anordnung der Einschnitte 36 und der Ausnehmung 38 ist in den Querschnitten der Figuren 5 und 6 nochmals dargestellt.

Wie in Fig. 7 dargestellt, ist die Erhebung 46 und die Membran 32 materialeinheitlich ausgebildet. In der axialen Richtung A hat die Membran eine Dicke D und die Erhebung eine Höhe H. Die Erhebung 46 hat in der in Fig. 7 gezeigten Ausführungsform lediglich einen ersten Seitenabschnitt 52. Ein zweiter Seitenabschnitt, der dem ersten Seitenabschnitt 52 gegenüberliegend angeordnet ist, ist in der in Fig. 7 dargestellten Ausführungsform nicht vorgesehen. Die Summe der Dicke D und der HöheHistin einem nicht komprimierten Zustand der Membran 32 und der Erhebungen 46, das heißt in einem nicht eingebauten Zustand, größer als der erste Abstand der erste Düsenplatte 28 und der zweiten Düsenplatte 30 in der axialen Richtung A.

Die Funktionsweise der Verdrehsicherung ist wie folgt. Die Membran 32 wird mit Hilfe der Erhebungen 46 zwischen die erste Düsenplatte 28 und die zweite Düsenplatte 30 geklemmt. Da vier Erhebungen 46 vorgesehen sind, wird die Membran 32 lediglich an diesen vier Punkten lokal eingeklemmt. Die vier Erhebungen stellen somit die Verdrehsicherung bereit. Da die Erhebungen 46 eine Querschnittsfläche haben, die deutlich kleiner als die Fläche der Membran 32 ist, wird das übrige Verhalten der Membran in axialer Richtung A durch die Erhebungen 46 nur wenig beeinflusst. Somit kann eine entkoppelte Membran 32 mit Verdrehsicherung vorgesehen werden.

### Bezugszeichenliste

- 10: Hydrolager
- 12: Traglager
- 14: Gehäuse
- 16: Trennvorrichtung
- 18: Arbeitskammer
- 20: Ausgleichskammer
- 22: Entkopplungsmembran
- 24: Überströmkanal
- 26: Kanal
- 28: erste Düsenplatte
- 30: zweite Düsenplatte
- 32: Membran
- 34: Öffnungen
- 36: Einschnitt
- 38: Ausnehmung
- 40: innerer Randbereich
- 42: äußerer Randbereich
- 44: Zwischenbereich
- 46: Erhebung
- 48: erste Erhebung
- 50: zweite Erhebung
- 52: erster Seitenabschnitt
- A: axiale Richtung
- D: Dicke
- H: Höhe
- U: Umfangsrichtung

## Patentansprüche

1. Trennvorrichtung (16) zur Anordnung zwischen einer Arbeitskammer (18) und einer Ausgleichskammer (20) eines Hydrolagers (10), umfassend
eine erste Düsenplatte (28),
eine zweite Düsenplatte (30), welche von der ersten Düsenplatte (28) in einem ersten Abstand beabstandet ist, und
eine Membran (32), welche zwischen der ersten Düsenplatte (28) und der zweiten Düsenplatte (30) angeordnet ist und elastisch ausgebildet ist,
wobei die Membran (32) wenigstens eine Erhebung (46) aufweist,
wobei die Erhebung (46) gegenüber der Membran (32) eine Höhe (H) aufweist,
wobei die Erhebung (46) derart ausgebildet ist, dass sie punktförmig an der ersten Düsenplatte (28) und/oder zweiten Düsenplatte (30) anliegt,
**dadurch gekennzeichnet, dass** eine Dicke (D) der Membran (32) und die Höhe (H) der Erhebung (46) im nicht eingebauten Zustand zusammen größer als der erste Abstand sind, so dass die Membran (32) punktförmig und ausschließlich durch die Erhebung (46) zwischen der ersten Düsenplatte (28) und der zweiten Düsenplatte (30) eingeklemmt ist,
dass die erste Düsenplatte (28) und/oder die zweite Düsenplatte (30) wenigstens eine Öffnung (34) aufweist, wobei die Membran (32) wenigstens einen Einschnitt (36) aufweist, welcher der Öffnung (34) zugeordnet ist, und
dass die Membran (32) einen inneren Randbereich (40), einen äußeren Randbereich (42) und einen Zwischenbereich (44) aufweist, der zwischen dem inneren Randbereich (40) und dem äußeren Randbereich (42) angeordnet ist, wobei der Einschnitt (36) im Zwischenbereich (44) angeordnet ist.

2. Trennvorrichtung (16) nach Anspruch 1, **dadurch gekennzeichnet, dass** die Erhebung (46) einen ersten Seitenabschnitt (52), welcher von einer ersten Seite der Membran (32) vorsteht, und einen zweiten Seitenabschnitt umfasst, welcher von einer zweiten Seite der Membran (32) vorsteht.

3. Trennvorrichtung (16) nach Anspruch 1 oder 2, **dadurch gekennzeichnet, dass** die Erhebung (46) elastisch ausgebildet ist, wobei vorzugsweise die Membran (32) und die Erhebung (46) materialeinheitlich ausgebildet sind.

4. Trennvorrichtung (16) nach Anspruch 2 oder 3, **dadurch gekennzeichnet, dass** der erste Seitenabschnitt (52) und/oder der zweite Seitenabschnitt kegelförmig oder halbkugelförmig ausgebildet sind.

5. Trennvorrichtung nach einem der voranstehenden Ansprüche, **dadurch gekennzeichnet, dass** eine erste Erhebung (46) an dem Zwischenbereich (44) angeordnet ist, wobei vorzugsweise eine zweite Erhebung (46) an dem äußeren Randbereich (42) angeordnet ist.

6. Trennvorrichtung (16) nach einem der Ansprüche 2 bis 5, **dadurch gekennzeichnet, dass** die Höhe (H) des ersten Seitenabschnitts (52) und/oder des zweiten Seitenabschnitts mindestens 0,2 mm und maximal 0,7 mm umfasst und insbesondere 0,5 mm misst.

7. Trennvorrichtung (16) nach einem der voranstehenden Ansprüche, **dadurch gekennzeichnet, dass** maximal vier Erhebungen (46) vorgesehen sind.

8. Hydrolager (10), umfassend
eine Arbeitskammer (18),
eine Ausgleichskammer (20) und
eine Trennvorrichtung (16) nach einem der Ansprüche 1 bis 7, welche zwischen der Arbeitskammer (18) und der Ausgleichskammer (20) angeordnet sind.

## Claims

1. A separating device (16) to be disposed between a working chamber (18) and a compensation chamber (20) of a hydromount (10), comprising:
a first nozzle disc (28),
a second nozzle disc (30) spaced apart from the first nozzle disc (28) by a first distance, and
a diaphragm (32) disposed between the first nozzle disc (28) and the second nozzle disc (30) and of resilient design,
wherein the diaphragm (32) has at least one elevation (46),
wherein the elevation (46) has a height (H) with respect to the diaphragm (32), and
wherein the elevation (46) is designed in such a way that it abuts in a punctiform manner the first nozzle disc (28) and/or the second nozzle disc (30),
**characterised in that**
in the non-installed state, a thickness (D) of the diaphragm (32) and the height (H) of the elevation (46) together are greater than the first distance, so that the diaphragm (32) is clamped in a punctiform manner and exclusively by the elevation (46) between the first nozzle disc (28) and the second nozzle disc (30),
**in that** the first nozzle disc (28) and/or the second nozzle disc (30) has at least one opening (34), wherein the membrane (32) has at least one incision (36) associated with the opening (34), and
**in that** the diaphragm (32) has an inner edge region (40), an outer edge region (42), and an intermediate region (44) disposed between the inner edge region (40) and the outer edge region (42), wherein the incision (36) is disposed in the intermediate region (44).

2. Separating device (16) according to claim 1, **characterised in that** the elevation (46) comprises a first side portion (52) projecting from a first side of the diaphragm (32) and a second side portion projecting from a second side of the diaphragm (32).

3. Separating device (16) according to claim 1 or 2, **characterised in that** the elevation (46) is of resilient design, wherein preferably the diaphragm (32) and the elevation (46) are of uniform material design.

4. Separating device (16) according to claim 2 or 3, **characterised in that** the first side portion (52) and/or the second side portion are of conical or hemispherical design.

5. Separating device according to any one of the preceding claims, **characterised in that** a first elevation (46) is arranged on the intermediate region (44), wherein preferably a second elevation (46) is arranged on the outer edge region (42).

6. Separating device (16) according to any one of claims 2 to 5, **characterised in that** the height (H) of the first side portion (52) and/or of the second side portion comprises at least 0.2 mm and at most 0.7 mm and in particular measures 0.5 mm.

7. Separating device (16) according to any one of the preceding claims, **characterised in that** no more than four elevations (46) are provided.

8. Hydromount (10), comprising:
a working chamber (18),
a compensation chamber (20) and
a separating device (16) according to any one of claims 1 to 7, the separating device (16) being disposed between the working chamber (18) and the compensation chamber (20).

## Revendications

1. Dispositif de séparation (16) destiné à être agencé entre une chambre de travail (18) et une chambre de compensation (20) d'un support hydraulique (10), comportant
une première plaque à buse (28),
une seconde plaque à buse (30) qui est espacée de la première plaque à buse (28) à une première distance, et
une membrane (32) qui est disposée entre la première plaque à buse (28) et la seconde plaque à buse (30) et qui est réalisée élastique,
dans lequel
la membrane (32) présente au moins un bossage (46),
le bossage (46) présente une hauteur (H) par rapport à la membrane (32),
le bossage (46) est réalisé de manière à prendre appui ponctuellement contre la première plaque à buse (28) et/ou contre la seconde plaque à buse (30),
**caractérisé en ce que**
une épaisseur (D) de la membrane (32) et la hauteur (H) du bossage (46) sont, dans l'état non monté, conjointement supérieures à la première distance, de sorte que la membrane (32) est serrée ponctuellement et exclusivement par le bossage (46) entre la première plaque à buse (28) et la seconde plaque à buse (30), **en ce que**
la première plaque à buse (28) et/ou la seconde plaque à buse (30) présente(nt) au moins une ouverture (34), la membrane (32) présentant au moins une entaille (36) qui est associée à l'ouverture (34), et **en ce que** la membrane (32) présente une zone de bord intérieure (40), une zone de bord extérieure (42) et une zone intermédiaire (44) qui est disposée entre la zone de bord intérieure (40) et la zone de bord extérieure (42), l'entaille (36) étant disposée dans la zone intermédiaire (44).

2. Dispositif de séparation (16) selon la revendication 1,
**caractérisé en ce que**
le bossage (46) présente une première portion latérale (52) qui fait saillie d'une première face de la membrane (32), et une seconde portion latérale qui fait saillie d'une seconde face de la membrane (32).

3. Dispositif de séparation (16) selon la revendication 1 ou 2,
**caractérisé en ce que**
le bossage (46) est réalisé élastique, la membrane (32) et le bossage (46) étant de préférence réalisés uniformément en termes de matière.

4. Dispositif de séparation (16) selon la revendication 2 ou 3,
**caractérisé en ce que**
la première portion latérale (52) et/ou la seconde portion latérale sont réalisées en forme de cône ou en forme de demi-sphère.

5. Dispositif de séparation (16) selon l'une des revendications précédentes,
**caractérisé en ce que**
un premier bossage (46) est disposé sur la zone intermédiaire (44), et de préférence un second bossage (46) est disposé sur la zone de bord extérieure (42).

6. Dispositif de séparation (16) selon l'une des revendications 2 à 5,
**caractérisé en ce que**
la hauteur (H) de la première portion latérale (52) et/ou de la seconde portion latérale est au minimum de 0,2 mm et au maximum de 0,7 mm et en particulier de 0,5 mm.

7. Dispositif de séparation (16) selon l'une des revendications précédentes,
**caractérisé en ce que**
il est prévu au maximum quatre bossages (46).

8. Support hydraulique (10), comportant
une chambre de travail (18),
une chambre de compensation (20), et
un dispositif de séparation (16) selon l'une des revendications 1 à 7, qui est disposé entre la chambre de travail (18) et la chambre de compensation (20).
